# EUROPÄISCHE PATENTSCHRIFT

(11) **EP 2 169 485 B1**
(45) Veröffentlichungstag und Bekanntmachung des Hinweises auf die Patenterteilung: **14.12.2011**
(21) Anmeldenummer: 09010968.7
(22) Anmeldetag: 26.08.2009
(51) Int. Cl.: G05B 19/042

(54) **Konfigurationseinrichtung zur Konfiguration eines zeitgesteuerten Bussystems**
Configuration device for configuring a TDMA bus system
Dispositif de configuration pour la configuration d'un système de bus commandé dans le temps

(30) Priorität: 26.09.2008 DE 102008049244
(43) Veröffentlichungstag der Anmeldung: 31.03.2010
(73) Patentinhaber: dspace digital signal processing and control engineering GmbH, 33102 Paderborn (DE)
(72) Erfinder: Brinksmeier, Kai, 33102 Paderborn (DE); Stolpe, Ralf, Dr.-Ing., 33161 Hövelhof (DE); Loose, Nico, 58256 Ennepetal (DE)
(74) Vertreter: Gesthuysen, Hans Dieter

(56) Entgegenhaltungen:
- WO-A1-03/021889
- US-A1- 2006 083 173

## Beschreibung

Die Erfindung betrifft eine Konfigurationseinrichtung mit wenigstens einer Rechnereinheit und einer Anzeigevorrichtung zur Konfiguration eines zeitgesteuerten Bussystems, wobei das Bussystem wenigstens zwei Busknoten und einen die Busknoten verbindenden Datenbus aufweist, wobei auf den Busknoten wenigstens eine Knotentask und wenigstens eine Transmissionstask ausführbar sind und wobei mit der Konfigurationseinrichtung die Knotentasks und die Transmissionstasks im Rahmen der Konfiguration zeitlich geordnet darstellbar, zeitlich einplanbar und einander zuordenbar sind und aufgrund der vorgenommenen Konfiguration wenigstens ein Knotentask-Programm und wenigstens ein Transmissionstask-Programm erzeugbar sind, mittels derer die Knotentasks und die Transmissionstask auf den Busknoten implementierbar sind. Darüber hinaus betrifft die Erfindung auch ein Verfahren zur Erzeugung wenigstens eines Knotentask-Programms und wenigstens eines Transmissionstask-Programms für ein zeitgesteuertes Bussystem, wobei das Bussystem wenigstens zwei Busknoten und einen die Busknoten verbindenden Datenbus aufweist, wobei mit dem Knotentask-Programm auf einem Busknoten eine Knotentask implementierbar ist, und wobei mit dem Transmissionstask-Programm auf einem der Busknoten wenigstens eine Transmissionstask implementierbar ist, wobei durch eine Konfiguration des Bussystems zunächst die Knotentasks und die Transmissionstasks zeitlich zueinander eingeplant, dargestellt und einander zugeordnet werden.

Konfigurationseinrichtungen der vorgenannten Art sind erst seit einigen Jahren bekannt, was insbesondere an dem Umstand liegt, daß zeitgesteuerte Bussysteme erst seit wenigen Jahren entwickelt und erst seit kurzem in anspruchsvollen Serienanwendungen eingesetzt werden. Typische Anwendungen liegen vor allem in solchen Bereichen der Technik, in denen auf komplexe, räumlich ausgedehnte, verteilte Prozesse mit hoher Zuverlässigkeit im weitesten Sinne steuernd eingewirkt werden soll.

In der WO 03/021889 A1 ist beispielsweise dargestellt, dass zeitgesteuerte Bussysteme (FlexRay) im Bereich Automotive Anwendung finden, wobei hier im Wesentlichen die Konfiguration verschiedener Kommunikationspfade innerhalb eines solchen Bussystems beschrieben wird. Die US 2006/0083173 A1 zeigt auf, welche Maßnahmen ergriffen werden müssen, wenn ein Busknoten in einem bestehenden und in Betrieb befindlichen Bussystem rekonfiguriert wird, die Konfiguration selbst wird im Detail nicht dargestellt.

Zeitgesteuerte Bussysteme unterscheiden sich von den weitaus verbreiteteren ereignisgesteuerten Bussystemen dadurch, daß die Buskommunikation - also das Versenden und das Empfangen von Nachrichten über den Datenbus des Bussystems - überwiegend in einem festgelegten Zeitplan erfolgt, der häufig als Schedule bezeichnet wird. Zu konfigurierten, festgelegten Zeitpunkten bzw. während festgelegter Zeitintervalle - slots - kann nur ein im Rahmen der Konfiguration festgelegter Teilnehmer des Bussystems - Busknoten - den Datenbus aktiv zur Übermittlung von Daten nutzen. Ein solches Verhalten ist von ereignisgesteuerten Bussystemen nicht bekannt, dort können verschiedene Busknoten konkurrierend auf den Datenbus des Bussystems zugreifen, wobei der Zeitpunkt des Zugriffs von bestimmten Ereignissen abhängt, deren zeitliches Auftreten in der Regel unbestimmt ist. Bei ereignisgesteuerten Bussystemen kann es daher zu einer fehlerhaften - z. B. bei kollidierender Busarbitrierung - Datenübertragungen kommen und zu daraus resultierenden Zeitverzögerungen, und es läßt sich - trotz verschiedener Maßnahmen, wie der Vergabe von Prioritäten an Busteilnehmer - ein bestimmtes Zeitverhalten nicht garantieren. Aus diesem Grund sind ereignisgesteuerte Bussysteme für sicherheitsrelevante Anwendungen wenig geeignet, wie z. B. Anwendungen aus dem automotiven Bereich, wo eine hohe Fehlertoleranz gefordert ist und beispielsweise die sichere Einhaltung von Abtastzeiten garantiert werden können muß.

Bei den hier betrachteten zeitgesteuerten Bussystemen werden zwei Arten von Aufgaben - Tasks - unterschieden, die auf den Busknoten ausgeführt werden können. Dies sind zum einen die internen Knotentasks, die außerhalb des Busknotens nicht unmittelbar wahrnehmbar sind, und die Transmissionstasks, die für die zeitgerechte Übertragung von Informationen über den Datenbus von einem Busknoten zu einem anderen Busknoten verantwortlich sind.

Im folgenden wird auf ein bestimmtes zeitgesteuertes Bussystem Bezug genommen, nämlich das FlexRay-Bussystem, das seit einiger Zeit auch Eingang in automotive Serienprodukte gefunden hat (x-by-wire-Anwendungen). Die hier beschriebene Konfigurationseinrichtung und das hier beschriebene Verfahren zur Konfiguration eines zeitgesteuerten Bussystems sind jedoch nicht auf diesen Standard beschränkt.

Im Rahmen des FlexRay-Standards werden bei den Knotentasks noch Applikationstasks und FTCom-Tasks unterschieden. Die Applikationstasks implementieren auf einem Busknoten eine Anwendung, wie die Berechnung eines Regelungsalgorithmus. Dabei werden beispielsweise Werte berechnet, die über den Datenbus des Bussystems an andere Busteilnehmer verschickt werden sollen. Die Applikationstasks werden üblicherweise auf einer internen Rechnereinheit des Busknotens ausgeführt. Die FTCom-Tasks ver- bzw. entpacken diese Werte in Datenpakete, die als Frames bezeichnet werden und sie dienen ferner dem Schreiben/Lesen der Frames seitens der internen Rechnereinheit eines Busknotens in/aus dem Buffer eines Kommunikations-Controllers, der mit der internen Rechnereinheit des Busknotens verbunden ist und Bestandteil des Busknotens ist. Die Frames/Nachrichten werden auf dem Kommunikations-Controller vorgehalten und durch die Transmissionstasks der zeitlichen Konfiguration entsprechend über den Datenbus des Bussystems versendet bzw. empfangen. Die Transmissionstasks dienen also der busseitigen Übertragung von Nachrichten.

Es ist unmittelbar einleuchtend, daß die zeitliche Abfolge der Ausführung von Knotentasks und Transmissionstasks auf einem Busknoten einerseits als auch die zeitliche Abfolge der Ausführung von Knotentasks und Transmissionstasks auf verschiedenen Knoten andererseits in zeitlichen Abhängigkeitsverhältnissen stehen können. Z. B. können Transmissionstasks bestimmte - aktuelle - Nachrichten nur dann sinnvoll verschicken, wenn die in den Nachrichten enthaltenen Signale bereits als Ergebnis der zugrundeliegenden Knotentasks vorliegen. Genauso können Berechnungen auf Busknoten, die von Berechnungsergebnissen anderer Busknoten abhängig sind, sinnvoller Weise auch erst dann ausgeführt werden, wenn die informationsbereitstellenden Berechnungen der anderen Knoten bereits abgeschlossen worden sind und die Ergebnisse dieser Berechnungen dem empfangenden Busknoten über den Datenbus des Bussystems bereits zur Verfügung gestellt worden sind.

Die zuvor beschriebenen Abhängigkeiten müssen bei der Konfiguration eines zeitgesteuerten Bussystems in Betracht gezogen werden, wobei die Konfiguration, also die zeitliche Festlegung und Einordnung der Gesamtheit aller Knotentasks und Transmissionstasks eines zeitgesteuerten Bussystems, in Abhängigkeit von der Anzahl der vorhandenen Tasks und der Busknoten des Bussystems sehr kompliziert sein kann.

Konfigurationseinrichtungen haben die Aufgabe, den Konfigurationsvorgang eines zeitgesteuerten Bussystems zu erleichtern, indem sie technische Hilfsmittel an die Hand geben, Knotentasks und Transmissionstasks zum einen Busknoten zuzuordnen und zum anderen alle Knotentasks und Transmissionstasks des Bussystems so darzustellen, daß sie zeitlich geordnet dargestellt werden, zeitlich einplanbar sind und einander zuordenbar sind. "Zeitlich einplanbar" bedeutet, daß die Konfigurationseinrichtung die Vorgabe von Ausführungszeiten - und gegebenenfalls die Periodizität der Ausführung - erlaubt und die "gegenseitige Zuordenbarkeit" bedeutet, daß bestimmt werden kann, welche Busknoten wie miteinander kommunizieren.

Im Stand der Technik sind verschiedene Konfigurationseinrichtungen mit einer Rechnereinheit und einer Anzeigevorrichtung bekannt, die dies ermöglichen. Bei einer Art von Konfigurationseinrichtungen wird das zeitgesteuerte Bussystem hierarchisch in Form eines Baumdiagramms dargestellt - Bussystem, Busknoten (mit den jeweiligen Controllern) und Kanäle der Busknoten - und Tasks werden in anderen Darstellungsfeldern ebenfalls in Baumstruktur oder in Listenform dargestellt, wobei diese Konfigurationseinrichtungen nachfolgend eine Zuordnung von Tasks zu Busknoten bzw. von mit den Tasks berechneten Signalen zu Kanälen der Busknoten ermöglichen und wobei die zeitliche Einordnung der Tasks ebenfalls anhand von Listendarstellungen erkennbar und eingebbar ist. Ein Beispiel für eine derartige Konfigurationseinrichtung ist das dSPACE FlexRay Configuration Package.

Andere Konfigurationseinrichtungen gehen von der graphischen Darstellung aller Knotentasks und Transmissionstasks über eine gemeinsame Zeitachse aus, was erhebliche Schwierigkeiten bereitet bei der Zuordnung zeitlich entfernter Knoten- und Transmissionstasks.

Die Konfigurationseinrichtungen haben insgesamt gemeinsam, daß aufgrund der vorgenommenen zeitlichen Einplanungen und Zuordnungen letztlich Knotentask-Programme und Transmissionstask-Programme erzeugbar sind, mittels derer die Knotentasks und die Transmissionstasks auf den jeweiligen Busknoten implementierbar sind. Dabei kann es auch sein, daß einzelne Busknoten im Rahmen des Rapid Control Prototyping durch eine Prototyping-Hardware ersetzt werden oder daß ein Großteil des Busses im Rahmen von Hardware-In-the-Loop-Simulationen von einem Simulationsrechner ersetzt wird; darauf kommt es vorliegend jedoch nicht an, die in Rede stehende Konfigurationseinrichtung und das in Rede stehende Verfahren sind auch auf solche Systeme gleichermaßen gut anwendbar.

Aufgabe der vorliegenden Erfindung ist es, eine Konfigurationseinrichtung anzugeben, die die aus dem Stand der Technik bekannten Nachteile - zumindest teilweise - vermeidet, die insbesondere technische Mittel bereitstellt, mittels derer die zeitliche Planung, Einordnung und gegenseitige Zuordnung von Knotentasks und Transmissionstasks mit dem Ziel der abschließenden Erstellung von Knotentask- und Transmissionstask-Programmen, vereinfacht. Gleiches gilt für ein diesbezügliches Verfahren.

Die zuvor aufgezeigte Aufgabe ist erfindungsgemäß zunächst bei einer Konfigurationseinrichtung der in Rede stehenden Art zur Konfiguration eines zeitgesteuerten Bussystems dadurch gelöst, daß die Knotentasks in zeitlicher Abfolge in einem Knotentaskfeld dargestellt sind, die Transmissionstasks in zeitlicher Abfolge in einem von dem Knotentaskfeld separaten Transmissionstaskfeld dargestellt sind und die Knotentasks und die Transmissionstasks durch graphische Zuordnungsmittel einander zuordenbar sind.

Durch die Darstellung der Knotentasks und der Transmissionstasks in separaten Feldern, nämlich im Knotentaskfeld und im Transmissionstaskfeld, ist grundsätzlich die Möglichkeit gegeben, einerseits die für die interne Funktionalität zuständigen und insoweit thematisch zusammengehörenden Knotentasks und andererseits die für die Kommunikation über den Datenbus zuständigen und insoweit thematisch zusammengehörigen Transmissionstasks getrennt voneinander übersichtlich darzustellen und diese Tasks für die Konfiguration, nämlich die zeitliche Einordnung und gegenseitige Zuordnung, leichter verfügbar zu machen.

Wenn davon die Rede ist, daß die in den voneinander verschiedenen Feldern, nämlich dem Knotentaskfeld und dem Transmissionstaskfeld dargestellten Knotentasks und Transmissionstasks durch graphische Zuordnungsmittel einander zuordenbar sind, dann ist damit selbstverständlich auch gemeint, daß auch nur Teile dieser verschiedenen Tasks einander zuordenbar sind. Am Beispiel des FlexRay-Busses bedeutet dies beispielsweise, daß nur die von den Knotentasks umfaßten FTCom-Tasks mit den Transmissionstasks verbunden werden bzw. diesen zugeordnet werden, da die ebenfalls von den Knotentasks umfaßten Applikationstasks nur mit den FTCom-Tasks in Verbindung stehen; in diesem allgemeinen Sinne ist die Zuordenbarkeit zu verstehen.

Der besondere Vorteil der erfindungsgemäßen Konfigurationseinrichtung wird bei einem bevorzugten Ausführungsbeispiel deutlich, das sich dadurch auszeichnet, daß die Darstellung der Knotentasks im Knotentaskfeld und die Darstellung der Transmissionstasks im Transmissionstaskfeld entweder zeitlich abhängig oder zeitlich unabhängig ist, wobei die Darstellung in zeitlicher Abhängigkeit und zeitlicher Unabhängigkeit vorzugsweise umschaltbar ist. Insbesondere die Darstellung der Transmissionstasks im Transmissionstaskfeld in zeitlicher Unabhängigkeit von der Darstellung der Knotentasks im Knotentaskfeld ermöglicht die Zuordnung zeitlich weit auseinander liegender Tasks zueinander, was bei der Darstellung der zuzuordnenden Tasks in einem einheitlichen Taskfeld nicht möglich ist und im Stand der Technik zu erheblichen Problemen bei der Konfiguration eines zeitgesteuerten Bussystems führt.

Selbst wenn die Darstellung der Knotentasks im Knotentaskfeld und die Darstellung der Transmissionstasks im Transmissionstaskfeld zeitlich abhängig voneinander sind, fördert dies die Konfigurierbarkeit des so erfaßten zeitgesteuerten Bussystem, da die die interne Berechnung und Kommunikation betreffenden Knotentasks getrennt angeordnet sind von den die Buskommunikation betreffenden Transmissionstasks.

Es hat sich als besonders vorteilhaft herausgestellt, wenn die Darstellung der Knotentasks im Knotentaskfeld und/oder die Darstellung der Transmissionstasks im Transmissionstaskfeld zeitlich skalierbar ist, so daß der Anwender darüber entscheiden kann, mit welcher zeitlichen Auflösung und damit Informationsdichte die zeitgeordneten Knotentasks und Transmissionstasks dargestellt sind, was entscheidend für die Gesamtübersicht über die vorgenommene Konfiguration ist und die Handhabbarkeit der Zuordnung der verschiedenen Tasks vorteilhaft beeinflußt; durch die zeitliche Skalierbarkeit ist gleichsam ein "Zoomen" in den verschiedenen Taskdarstellungen möglich

Bei einem weiteren bevorzugten Ausführungsbeispiel ist die Darstellung der Knotentasks im Knotentaskfeld und/oder die Darstellung der Transmissionstasks im Transmissionstaskfeld ein Ausschnitt aus der gesamten zeitlichen Konfiguration, so daß auch die Möglichkeit besteht, die Darstellung in einer hohen zeitlichen Auflösung in einem vergleichsweise übersichtlichen Taskfeld vorzunehmen. Es hat sich dann als besonders praktisch erwiesen, wenn der dargestellte zeitliche Ausschnitt aus der Gesamtkonfiguration wählbar ist und beispielsweise verschoben werden kann. Dann ist es möglich, einander zuzuordnende Knotentasks des Knotentaskfeldes und Transmissionstasks des Transmissionstaskfeld auch auf beschränktem Platz nah zueinander darzustellen und mit graphischen Zuordnungsmitteln einander zuzuordnen.

In bevorzugten Ausgestaltungen der Erfindung erfolgt die Darstellung der Knotentasks im Knotentaskfeld und/oder die Darstellung der Transmissionstasks im Transmissionstaskfeld als Balkenplan, wobei das graphische Zuordnungsmittel in gerichteten Verbindungslinien zwischen diesen Tasks besteht. Die Balkenplandarstellung ermöglicht insbesondere auch die Berücksichtigung der Tatsache, daß jede Task für sich genommen auch eine zeitliche Erstreckung hat, die durch die für die Ausführung der Task benötigte Zeit bedingt ist.

Nach einer weiteren unabhängigen Lehre der Erfindung ist die zuvor hergeleitete Aufgabe auch bei dem einleitend dargestellten Verfahren zur Erzeugung wenigstens eines Knotentask-Programms und wenigstens eines Transmissionstask-Programms für ein zeitgesteuertes Bussystem dadurch gelöst, daß die Knotentasks in zeitlicher Abfolge in einem Knotentaskfeld dargestellt werden, die Transmissionstasks in zeitlicher Abfolge in einem von dem Knotentaskfeld separaten Transmissionstaskfeld dargestellt werden und die Knotentasks und die Transmissionstasks durch graphische Zuordnungsmittel einander zugeordnet werden. Das Verfahren kann insgesamt durch die Verfahrensschritte erweitert werden, die mit der zuvor ausführlich beschriebenen Konfigurationseinrichtung durchführbar sind.

Die Erfindung betrifft ferner ein Computerprogramm mit Programmcode-Mitteln, um alle mit Hilfe des zuvor beschriebenen Verfahrens vollzogenen Schritte durchzuführen, wenn das Programm auf einer entsprechenden Datenverarbeitungsanlage ausgeführt wird. Die Erfindung betrifft auch ein Computerprogramm mit Programmcode-Mitteln der zuvor beschriebenen Art, die auf einem computerlesbaren Datenträger gespeichert sind.

Im einzelnen gibt es nun eine Vielzahl von Möglichkeiten, die erfindungsgemäße Konfigurationseinrichtung und das erfindungsgemäße Verfahren zur Konfiguration eines zeitgesteuerten Bussystems auszugestalten und weiterzubilden. Dazu wird verwiesen einerseits auf die den Patentansprüchen 1 und 9 nachgeordneten Patentansprüche, andererseits auf die folgende Beschreibung von Ausführungsbeispielen in Verbindung mit der Zeichnung. In der Zeichnung zeigen
- Fig. 1: eine Prinzipdarstellung eines zeitgesteuerten Bussystems mit zwei Busknoten und einem Datenbus, angelehnt an den FlexRay- Standard,
- Fig. 2: ein Zeitraster zur Konfiguration eines zeitgesteuerten Bussy- stems, hier am Beispiel des FlexRay-Standards,
- Fig. 3: das Ausführungsbeispiel einer Anzeigevorrichtung einer erfin- dungsgemäßen Konfigurationseinrichtung mit separatem Knoten- taskfeld und Transmissionstaskfeld,
- Fig. 4: ein weiteres Ausführungsbeispiel der Anzeigevorrichtung einer erfindungsgemäßen Konfigurationseinrichtung mit einer zeitlich gekoppelten Ansicht von Knotentaskfeld und Transmissions- taskfeld mit eingeblendeten graphischen Zuordnungsmitteln,
- Fig. 5: ein weiteres Ausführungsbeispiel der Anzeigevorrichtung einer erfindungsgemäßen Konfigurationseinrichtung mit Knotentask- feld und Transmissionstaskfeld,
- Fig. 6: ein weiteres Ausführungsbeispiel der Anzeigevorrichtung einer erfindungsgemäßen Konfigurationseinrichtung mit hervorgeho- benen Instanzen einer über das Bussystem verschickten Nach- richt und
- Fig. 7: ein letztes Ausführungsbeispiel der Anzeigevorrichtung einer er- findungsgemäßen Konfigurationseinrichtung mit einer Auswahl an dargestellten Knotentasks und Transmissionstasks aus der Ge- samtheit der insgesamt verfügbaren Knotentasks und Transmis- sionstasks.

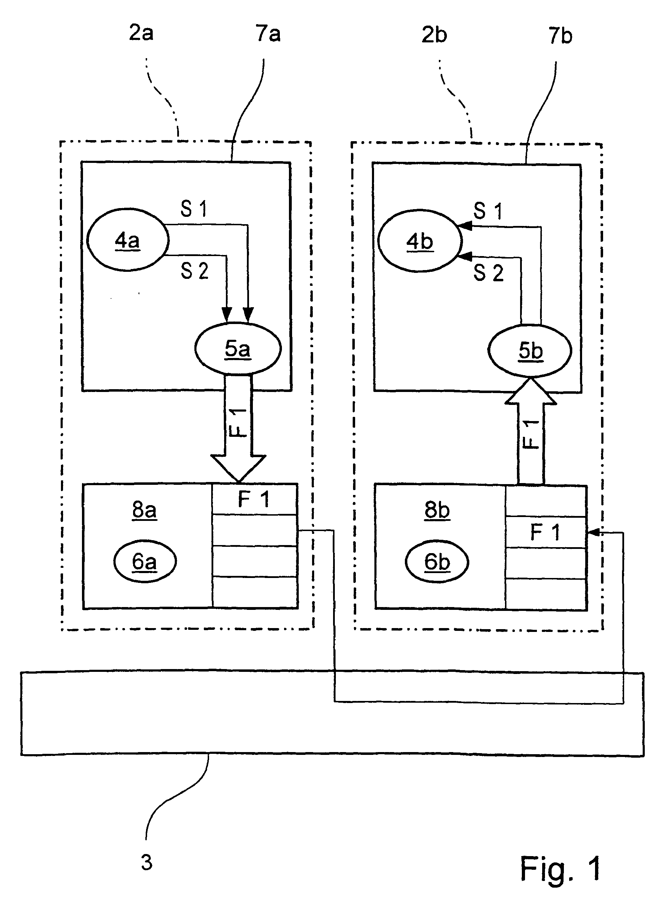

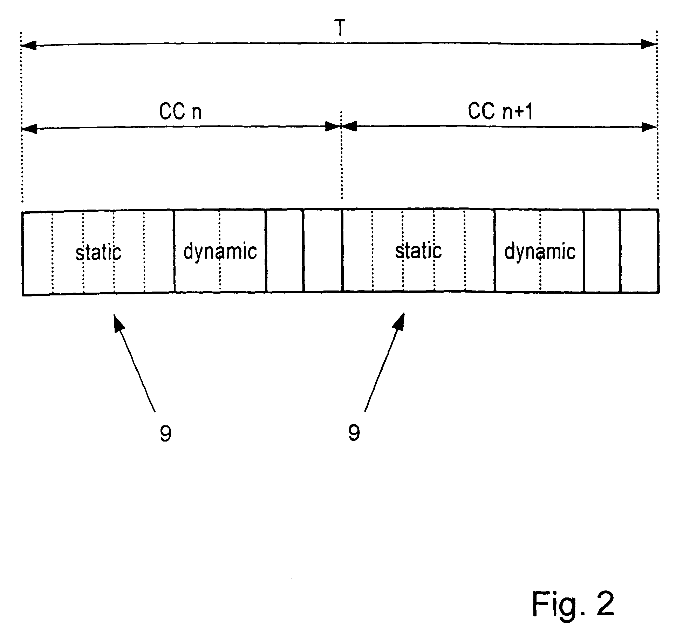

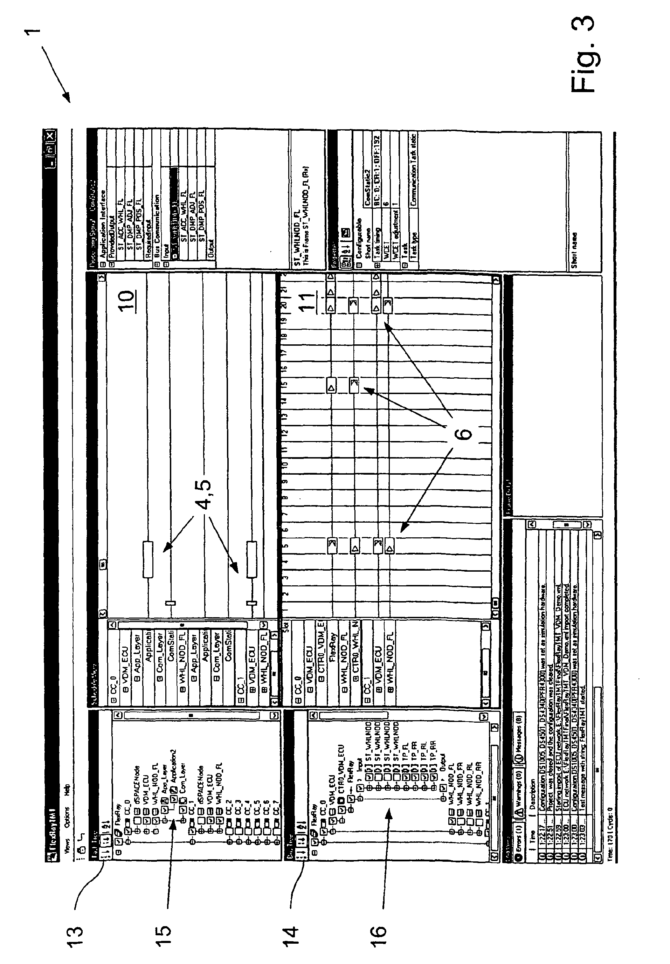

In den Fig. 3 bis 7 ist insgesamt die Anzeigevorrichtung 1 einer erfmdungsgemäßen Konfigurationseinrichtung dargestellt. Die von der Konfigurationseinrichtung umfaßte Rechnereinheit ist nicht ausdrücklich dargestellt. Die Konfigurationseinrichtung dient insgesamt zur Konfiguration eines in der Fig. 1 dargestellten zeitgesteuerten Bussystems, wobei das Bussystem wenigstens zwei Busknoten 2a, 2b und einen die Busknoten 2a, 2b verbindenden Datenbus 3 aufweist. Auf den Busknoten 2a, 2b können jeweils wenigstens eine Knotentask 4a, 4b, 5a, 5b und wenigstens eine Transmissionstask 6a, 6b ausgeführt werden. Das in Fig. 1 dargestellte Bussystem ist ein FlexRay-Bus und die in Fig. 2 schematisch dargestellte zeitliche Konfigurationsraster des Bussystems zeigt ebenfalls die Konfigurationsmöglichkeiten eines FlexRay-Busses.

Die in Fig. 1 dargestellten Busknoten 2a, 2b umfassen jeweils eine interne Rechnereinheit 7a, 7b und jeweils einen Kommunikations-Controller 8a, 8b.. Auf der internen Rechnereinheit 7a, 7b werden die nach außen nicht unmittelbar wahrnehmbaren Knotentasks 4a, 5a; 4b, 5b ausgeführt, indem die ihnen zugrundeliegenden Knotentask-Programme von den internen Rechnereinheiten 7a, 7b abgearbeitet werden.

Die Knotentasks 4a, 5a; 4b, 5b umfassen hier jeweils zwei Komponenten, nämlich Applikationstasks 4a, 4b und FTCom-Tasks 5a, 5b. Die Applikationstasks 4a, 4b dienen der Ausführung von Algorithmen, die mit dem technischphysikalischen Prozeß in Verbindung stehen, der vorliegend nicht dargestellt ist, der jedoch in der Regel mit den Busknoten 2a, 2b in Verbindung steht. In dem in Fig. 1 dargestellten Ausführungsbeispiel sind die Applikationstasks 4a, 4b Regelungsalgorithmen, wobei die Applikationstask 4a die Signale S1, S2 erzeugt, die von der Applikationstasks 4b nachfolgend weiter verwendet werden. Die FTCom-Tasks 5a, 5b ver- bzw. entpacken die Signale in ein Datenpaket F1, das als Frame bezeichnet wird. Die FTCom-Tasks 5a 5b übermitteln diese Datenpakete ferner zwischen den internen Rechnereinheiten 7a, 7b und den Kommunikationscontrollern 8a, 8b. Die Transmissionstasks 6a, 6b sind dann für die zeitgerechte Übermittlung des Datenpakets F 1 über den Datenbus 3 verantwortlich.

In Fig. 2 ist ganz schematisch der grundlegende Aufbau der zeitlichen Planungsmöglichkeiten eines zeitgesteuerten Bussystems nach dem FlexRay-Standard dargestellt. Der gesamte zeitliche Planungszeitraum erstreckt sich über das Zeitintervall T, wobei das Zeitintervall T in mehrere Kommunikationszyklen CCₙ und CCₙ₊₁ aufgeteilt ist. Im vorliegenden Fall liegen lediglich zwei Kommunikationszyklen CCₙ und CCₙ₊₁ vor, üblicherweise teilen deutlich mehr Kommunikationszyklen das Gesamtintervall T auf. Jeder Kommunikationszyklus ist in einen in zeitlicher Hinsicht statisch geplanten und dynamisch zur Verfügung gestellten Zeitraum für die Nutzung des Datenbusses 3 aufgeteilt, jeweils bezeichnet mit "static" und "dynamic". Die Knotentasks 4a, 4b, 5a, 5b und die Transmissionstasks 6a, 6b lassen sich bei dem in Rede stehenden zeitgesteuerten Bussystem durch die Konfiguration verschiedenen Zeitabschnitten 9 - "slots" - zuordnen, was in Fig. 2 im Detail nicht dargestellt ist. Knotentasks 4a, 4b, 5a, 5b und Transmissionstasks 6a, 6b können im Rahmen des FlexRay-Standards verschiedenen Kommunikationszyklen CCₙ und CCₙ₊₁ zugeordnet werden, so daß sie innerhalb des gesamten Konfigurationsintervalls T eine Periodizität aufweisen können.

Die Aufgabe der Konfigurationseinrichtung besteht darin, die Knotentasks 4a, 4b, 5a, 5b und die Transmissionstasks 6a, 6b im Rahmen der Konfiguration zeitlich geordnet darzustellen und zeitlich einplanbar und einander zuordenbar zu machen, so daß aufgrund der vorgenommenen Konfiguration wenigstens ein Knotentask-Programm und wenigstens ein Transmissionstask-Programm erzeugbar sind, mittels derer die Knotentasks 4a, 4b, 5a, 5b und die Transmissionstasks 6a, 6b auf den realen Busknoten 2a, 2b implementierbar sind.

Die Fig. 3 bis 7 zeigen die Elemente einer Anzeigevorrichtung 1 einer Konfigurationseinrichtung, die eine zeitliche Konfiguration des Bussystems erlauben. Dargestellt ist jeweils die gesamte Anzeige der Anzeigevorrichtung 1 der Konfigurationseinrichtung, wobei die Knotentasks 4, 5 in zeitlicher Abfolge in einem Knotentaskfeld 10 dargestellt sind und wobei die Transmissionstasks 6 in zeitlicher Abfolge in einem von dem Knotentaskfeld 10 verschiedenen Transmissionstaskfeld 11 dargestellt sind und die Knotentasks 4, 5 und die Transmissionstasks 6 durch graphische Zuordnungsmittel 12 einander zuordenbar sind.

Die getrennte Anordnung der Knotentasks 4, 5 in dem Knotentaskfeld 10 und der Transmissionstasks 6 in dem Transmissionstaskfeld 11 ist weitaus übersichtlicher, als die gemeinsame Handhabung der Knotentasks 4, 5 und der Transmissionstasks 6 in einem gemeinsamen Taskfeld, wobei die getrennte Anordnung der Knotentasks 4, 5 und der Transmissionstasks 6 - wie in den Fig. 3 bis 7 gezeigt - insbesondere die Konfigurierbarkeit des Bussystems enorm erleichtert, da für den Anwender sofort erkennbar ist, welche Tasks mit welchen anderen Tasks überhaupt verbindbar sind; so kann beispielsweise eine Transmissionstask 6 eingangs- und ausgangsseitig stets nur verbunden sein mit einer Knotentask 4, 5 und umgekehrt.

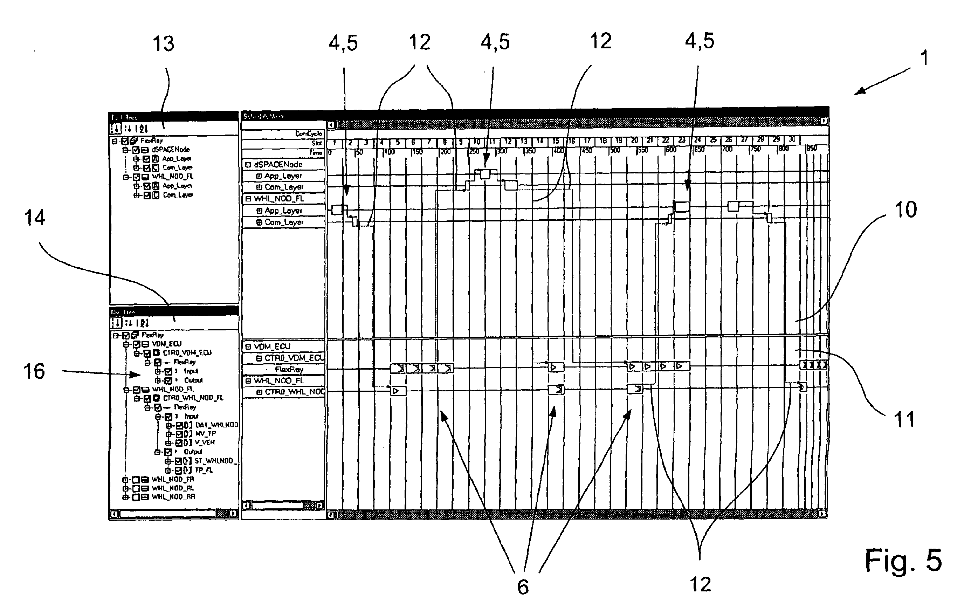

In den Fig. 3 bis 7 ist jeweils zu erkennen, daß in dem Knotentaskfeld 10 und in dem Transmissionstaskfeld 11 die Planungszeit zunächst horizontal von links nach rechts verlaufend dargestellt ist, teils - wie z. B. in Fig. 5 im Knotentaskfeld 10 - auch mit zwei mit verschiedenen Einheiten versehenen Zeitachsen, nämlich zum einen mit der Aufteilung in verschiedene Zeitscheiben "slots" und zum anderen mit einer Zeitachse "time".

In den dargestellten Ausführungsbeispielen verläuft die Zeit aber zum Teil zusätzlich auch in vertikaler Erstreckungsrichtung, was daran zu erkennen ist, daß auf der linken Seite des Knotentaskfeldes 10 und des Transmissionstaskfeldes 11 die aufeinanderfolgenden Kommunikationszyklen CC_0, CC_1 von oben nach unten verlaufend aufgelistet sind, wobei innerhalb eines jeden Kommunikationszyklus CC_0, CC_1 die entsprechenden Busknoten (VDM_ECU, WHL_NOD_FL, etc.) aufgelistet sind, die innerhalb des jeweiligen Kommunikationszyklus CC_0, CC_1 aufgerufen werden. In den dargestellten Ausführungsbeispielen verläuft die Zeitachse daher gleichsam umgebrochen wie Textzeilen, von links nach rechts und von oben nach unten. Von besonderem Vorteil ist die getrennte Darstellung der Knotentasks 4, 5 in dem Knotentaskfeld 10 einerseits und der Transmissionstasks 6 in dem Transmissionstaskfeld 11 andererseits in einer zeitlichen Abhängigkeit zueinander, wie beispielsweise in Fig. 5, da hier ein Eindruck über die tatsächliche relative zeitliche Zuordnung der Knotentasks 4, 5 zu den Transmissionstasks 6 ersichtlich ist. In anderen Situationen ist es vorteilhafter, wenn die Darstellung der Knotentasks 4, 5 im Knotentaskfeld 10 und die Darstellung der Transmissionstasks 6 im Transmissionstaskfeld 11 zeitlich unabhängig voneinander ist, da dann auch zeitlich weit auseinander liegende Tasks in relativer Nähe zueinander darstellbar sind und eine Konfiguration solcher Tasks - wie z. B. deren Zuordnung - sehr einfach möglich ist. In allen hier dargestellten Ausführungsbeispielen ist die Konfigurationseinrichtung so ausgestaltet, daß die Darstellung der Knotentasks 4, 5 im Knotentaskfeld 10 und die Darstellung der Transmissionstasks 6 im Transmissionstaskfeld 11 umschaltbar ist, wodurch die Vorteile beider Darstellungen bedarfsweise genutzt werden können.

Die Anordnung der Knotentasks 4, 5 im Knotentaskfeld 10 und die Anordnung der Transmissionstasks 6 im Transmissionstaskfeld 11 sind in den Fig. 3 bis 7 durch die Konfigurationseinrichtung zeitlich skalierbar, so daß die Informationsdichte der Darstellung angepaßt werden kann. In den Fig. 3, 4 und 6, 7 zeigen die Darstellung der Knotentasks 4, 5 im Knotentaskfeld 10 und die Darstellung der Transmissionstasks 6 im Transmissionstaskfeld 11 jeweils nur einen Ausschnitt aus der gesamten zeitlichen Konfiguration, wobei in den vorliegenden Fällen in horizontaler Erstreckungsrichtung der Zeitachse nicht alle geplanten oder planbaren Zeitscheiben - slots - dargestellt sind. Der tatsächlich dargestellte Ausschnitt ist über Scroll-Bars einstellbar. Dadurch können zeitlich weit voneinander entfernte Knotentasks 4, 5 und Transmissionstasks 6 in relativer Nähe zueinander angeordnet, dargestellt und bearbeitet werden, was eine erhebliche Vereinfachung gegenüber solchen Konfigurationseinrichtungen darstellt, bei denen Knotentasks zusammen mit Transmissionstasks in einer einheitlichen zeitlichen Darstellung untergebracht sind.

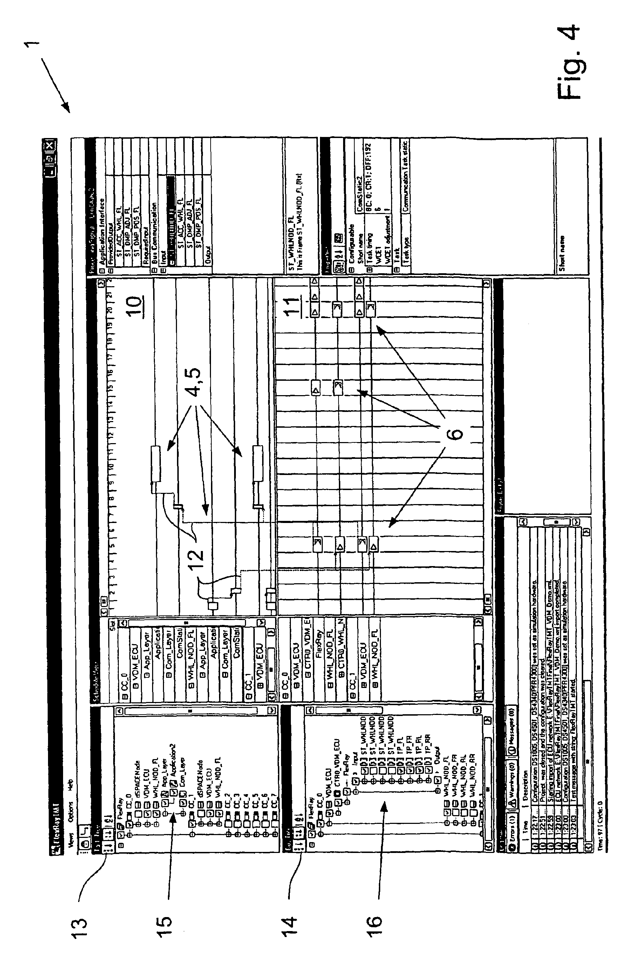

Bei allen Ausführungsbeispielen werden die Knotentasks 4, 5 im Knotentaskfeld 10 und die Transmissionstasks 6 im Transmissionstaskfeld 11 als Balken dargestellt, so daß insgesamt ein Balkenplan der Gesamtkonfiguration vorliegt. Dies hat den Vorteil, daß nicht nur der Anfangszeitpunkt einer Task 4, 5, 6 festlegbar und ersichtlich ist, sondern auch Laufzeiten der Tasks 4, 5, 6 berücksichtigt werden können, was zur Planungssicherheit beiträgt. Die graphischen Zuordnungsmittel 12 bestehen in der graphischen Darstellung aus gerichteten Verbindungslinien, wie aus den Fig. 4 und 5 ersichtlich ist.

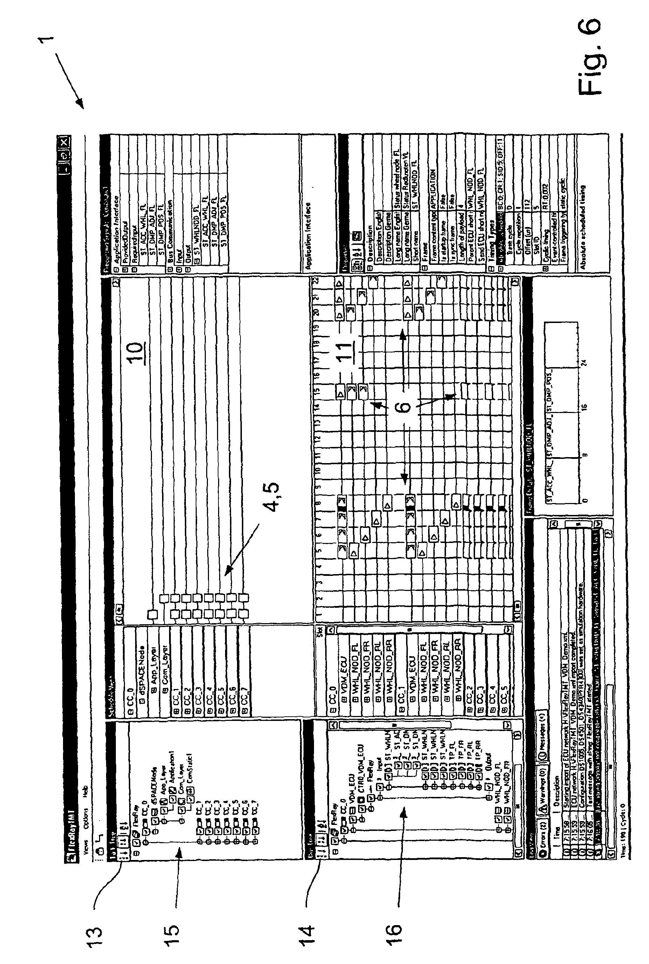

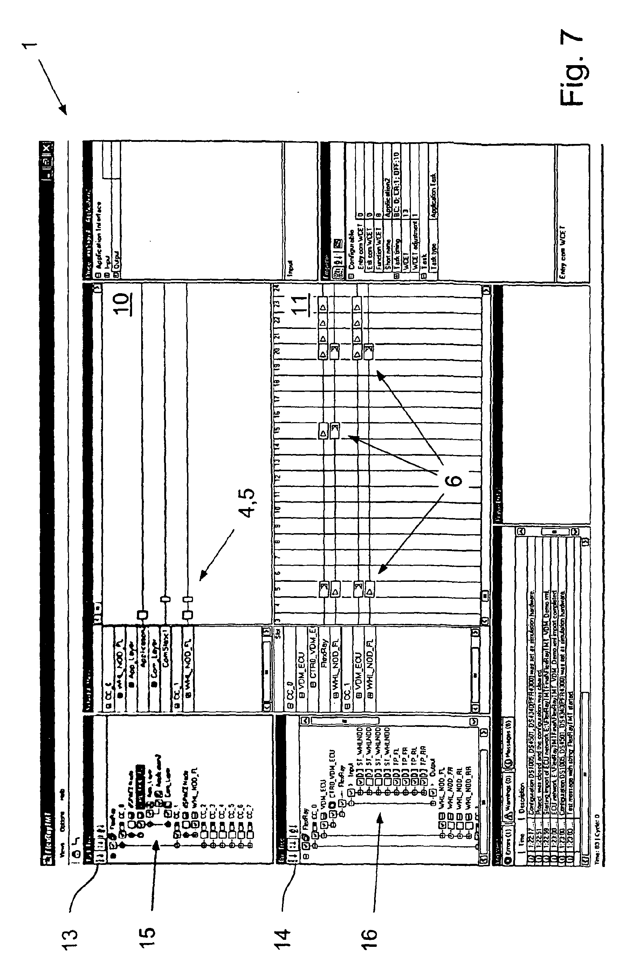

In Fig. 7 ist gezeigt, daß die Konfigurationseinrichtung die Möglichkeit bietet, die im Knotentaskfeld 10 darzustellenden Knotentasks 4, 5 und die im Transmissionstaskfeld 11 darzustellenden Transmissionstasks 6 auszuwählen aus der Gesamtheit der Knotentasks 4, 5 und der Gesamtheit der Transmissionstask 6, wodurch es möglich ist, ausschließlich die Elemente der gerade interessierenden Busknoten unter Ausblendung der Elemente aller anderen Busknoten zu bearbeiten. Dies ist ein erheblicher Vorteil für die Konfigurierbarkeit des zeitgesteuerten Bussystems. Dargestellt ist in Fig. 7 nur das Geschehen in den Kommunikationszyklen CC_0 und CC_1, alle anderen Kommunikationszyklen - nämlich die Kommunikationszyklen CC_3 bis CC_7, wie in Fig. 6 ersichtlich - sind ausgeblendet.

Ergänzend weist die Konfigurationseinrichtung in den Darstellungen der Anzeigevorrichtung 1 in den Fig. 3 bis 7 zusätzlich zu dem Knotentaskfeld 10 ein dem Knotentaskfeld 10 zugeordnetes Knoten-Busstrukturfeld 13 auf und zusätzlich zu dem Transmissionstaskfeld 11 ein dem Transmissionstaskfeld zugeordnetes Transmissions-Busstrukturfeld 14 auf. Die Busstrukturfelder 13, 14 stellen die Elemente des Bussystems als Baumdiagramme dar, was eine hierarchische Darstellung der Elemente des Bussystems und eine funktionale Zuordnung ermöglicht. Die Organisation der Busstrukturfelder 13, 14 kann hardwareorientiert nach Buselementen erfolgen, wie beispielsweise in Fig. 5 zu sehen, alternativ können die Baumdiagramme der Busstrukturfelder 13, 14 zeitplanorientiert nach Planungszeiten geordnet sein, so wie dies in den Fig. 3, 4 und 6, 7 gezeigt ist. Bei allen hier behandelten Konfigurationseinrichtungen ist die Art der Organisation der Baumdiagramme in den Busstrukturfeldern 13, 14 umschaltbar. Mit der Wahl der Organisation der Baumdiagramme in den Busstrukturfeldern 13, 14 ändert sich auch die Organisation der korrespondierenden Darstellung in den Taskfeldem 10, 11, so daß immer eine konsistente Darstellung der inhaltlich einander zugeordneten Felder 10, 13 und 11, 14 resultiert.

In den Busstrukturfeldern 13, 14 sind die Busknoten unter anderem bezeichnet mit "dSPACENode", "VDM_ECU" und "WHL_NOD_FL". Innerhalb des Knotentaskfeldes 10 und des Transmissionstaskfeldes 11 sind rechts von den namentlich genannten Knoten - z. B. VDM_ECU oder WHL_NOD_FL - auf einer horizontalen Linie alle dem betreffenden Knoten zugeordneten Tasks - also im Falle des Knotentaskfeldes 10 Knotentasks 4, 5 und im Falle des Transmissionstaskfeldes 11 die Transmissionstasks 6 - dargestellt. In den Figuren ist ebenfalls zu erkennen, daß innerhalb der Busstrukturfelder 13, 14 in der Baumstruktur die einzelnen Busknoten dargestellt sind, unter den Busknoten die zugehörigen Kommunikations-Controller - z. B. "CTR0_VDM_ECU" - und unterhalb der betreffenden Kommunikations-Controller sind die Ein- und Ausgangskanäle der Controller sichtbar sowie die darüber empfangenen oder gesendeten Datenpakete - "Frames" -.

In Fig. 6 ist zu erkennen, daß alle Instanzen eines solchen Frames, bzw. eigentlich einer den Frame verschickenden Transmissionstask 6, angezeigt werden, wenn eine solche Instanz ausgewählt wird. In Fig. 6 ist beispielsweise in Slot 8 im Transmissionstaskfeld 11 eine Transmissionstask 6 ausgewählt worden, die auf dem Busknoten "VDM_ECU" angesiedelt ist. Die Auswahl ist an dem vertikalen Strich zu erkennen. Eine solche Instanzendarstellung erleichtert das Auffinden korrespondierender Tasks in einer Gesamtkonfiguration des Bussystems. Die Auswahl dieser empfangenden Transmissionstask 6 im Transmissionstaskfeld 11 führt aufgrund der konsistenten Darstellung im entsprechenden Transmissions-Busstrukturfeldes 14 zu einer analogen Kennzeichnung des Elements "TP_RR". Umgekehrt führt eine Auswahl eines Elements in einem Busstrukturfeld 13, 14 zu einer entsprechenden Auswahl und Kennzeichnung des korrespondierenden Elements im zugeordneten Taskfeld 11, 12.

Die zu den in den Fig. 3 bis 7 dargestellten Anzeigevorrichtungen 1 gehörenden Konfigurationseinrichtungen ermöglichen ebenfalls eine Zuordnung von Knotentasks 4, 5 zu Transmissionstasks 6 durch Zuordnung von Elementen 15 des Knoten-Busstrukturfelds 13 zu Elementen des Transmissionstaskfeldes 11 - also zu Transmissionstasks 6 - und zu Elementen 16 des Transmissions-Busstrukturfeldes 14. Ferner ist eine Zuordnung von Transmissionstasks 6 zu Knotentasks 4, 5 auch durch Zuordnung von Elementen 16 des Transmissions-Busstrukturfeldes 14 zu Elementen des Knotentaskfeldes 10 - also zu Knotentasks 4, 5 - und zu Elemente 15 des Knoten-Busstrukturfelds 13 vornehmbar, wobei in beiden Fällen die Zuordnung durch Drag & Drop-Technik möglich ist. Die Drag & Drop-Technik kann auch verwendet werden, um Zuweisungen vorzunehmen zwischen Elementen des Knotentaskfeldes 10 und des Transmissionstaskfeldes 11; die graphischen Zuordnungsmittel werden dann automatisch von der Konfigurationseinrichtung gesetzt.

## Patentansprüche

1. Konfigurationseinrichtung mit wenigstens einer Rechnereinheit und einer Anzeigevorrichtung (1) zur Konfiguration eines zeitgesteuerten Bussystems, wobei das Bussystem wenigstens zwei Busknoten (2a, 2b) und einen die Busknoten (2a, 2b) verbindenden Datenbus (3) aufweist, wobei auf den Busknoten (2a, 2b) wenigstens eine Knotentasks (4a, 4b, 5a, 5b) und wenigstens eine Transmissionstask (6a, 6b) ausführbar sind und wobei mit der Konfigurationseinrichtung die Knotentasks (4a, 4b, 5a, 5b) und die Transmissionstasks (6a, 6b) im Rahmen der Konfiguration zeitlich geordnet darstellbar, zeitlich einplanbar und einander zuordenbar sind und aufgrund der vorgenommenen Konfiguration wenigstens ein Knotentask-Programm und wenigstens ein Transmissionstask-Programm erzeugbar sind, mittels derer die Knotentask (4a, 4b, 5a, 5b) und die Transmissionstask (6a, 6b) auf den Busknoten (2a, 2b) implementierbar sind,
**dadurch gekennzeichnet,**
**daß** die Knotentasks (4a, 4b, 5a, 5b) in zeitlicher Abfolge in einem Knotentaskfeld (10) dargestellt sind, die Transmissionstasks (6a, 6b) in zeitlicher Abfolge in einem von dem Knotentaskfeld (10) separaten Transmissionstaskfeld (11) dargestellt sind und die Knotentasks (4a, 4b, 5a, 5b) und die Transmissionstasks (6a, 6b) durch graphische Zuordnungsmittel (12) einander zuordenbar sind.

2. Konfigurationseinrichtung nach Anspruch 1, **dadurch gekennzeichnet, daß** die Darstellung der Knotentasks (4, 5) im Knotentaskfeld (10) und die Darstellung der Transmissionstasks (6) im Transmissionstaskfeld (11) zeitlich abhängig oder zeitlich unabhängig ist, insbesondere wobei die Darstellung in zeitlicher Abhängigkeit und zeitlicher Unabhängigkeit umschaltbar ist.

3. Konfigurationseinrichtung nach Anspruch 1 oder 2, **dadurch gekennzeichnet, daß** die Darstellung der Knotentasks (4, 5) im Knotentaskfeld (10) und/oder die Darstellung der Transmissionstasks (6) im Transmissionstaskfeld (11) zeitlich skalierbar ist.

4. Konfigurationseinrichtung nach einem der Ansprüche 1 bis 3, **dadurch gekennzeichnet, daß** die Darstellung der Knotentasks (4, 5) im Knotentaskfeld (10) und/oder die Darstellung der Transmissionstasks (6) im Transmissionstaskfeld (11) ein Ausschnitt aus der gesamten zeitlichen Konfiguration ist, insbesondere wobei der Ausschnitt wählbar ist.

5. Konfigurationseinrichtung nach einem der Ansprüche 1 bis 4, **dadurch gekennzeichnet, daß** die Darstellung der Knotentasks (4, 5)im Knotentaskfeld (10) und/oder die Darstellung der Transmissionstasks (6) im Transmissionstaskfeld (11) als Balkenplan erfolgt, insbesondere wobei das graphischen Zuordnungsmittel (12) in einer gerichteten Verbindungslinie besteht, insbesondere wobei die graphische Zuordnung durch Drag&Drop-Technik vornehmbar ist.

6. Konfigurationseinrichtung nach einem der Ansprüche 1 bis 5, **dadurch gekennzeichnet, daß** die im Knotentaskfeld (10) darzustellenden Knotentasks (4, 5) und/oder die im Transmissionstaskfeld (11) darzustellenden Transmissionstasks (6) auswählbar sind aus der Gesamtheit der Knotentasks (4, 5) und/oder der Gesamtheit der Transmissionstasks (6), insbesondere auswählbar sind nach Busknotenzugehörigkeit oder nach Zugehörigkeit zu einem Kommunikationszyklus.

7. Konfigurationseinrichtung nach einem der Ansprüche 1 bis 6, **dadurch gekennzeichnet, daß** zusätzlich zu dem Knotentaskfeld (10) ein dem Knotentaskfeld (10) zugeordnetes Knoten-Busstrukturfeld (13) dargestellt ist und/oder zusätzlich zu dem Transmissionstaskfeld (11) ein dem Transmissionstaskfeld (11) zugeordnetes Transmissions-Busstrukturfeld (14) dargestellt ist, wobei die Busstrukturfelder (13, 14) die Elemente des Bussystems, insbesondere Busknoten, Knotentasks, Transmissionstasks, Signale, Frames und Planzeiten, als Baumdiagramm darstellen, insbesondere wobei das Bussystem in den Busstrukturfeldern (13, 14) vorrangig hardwareorientiert nach Buselementen geordnet ist oder vorrangig zeitplanorientiert nach Planungszeiten geordnet ist, insbesondere wobei die Art der Darstellung umschaltbar ist, insbesondere wobei die gewählte Ordnung auch auf die zugeordneten Taskfelder (10, 11) automatisch übertragen wird, so daß die Darstellung der Elemente des Bussystems in den Busstrukturfeldern (13, 14) und den korrespondierenden Taskfeldern (10,11) konsistent ist.

8. Konfigurationseinrichtung nach Anspruch 7, **dadurch gekennzeichnet, daß** eine Zuordnung von Knotentasks (4, 5) zu Transmissionstasks (6) auch durch Zuordnung von Elementen (15) des Knoten-Busstrukturfeldes (13) zu Elementen des Transmissionstaskfeldes (11) und/oder zu Elementen (16) des Transmissions-Busstrukturfeldes (14) vornehmbar ist und/oder daß eine Zuordnung von Transmissionstasks (6) zu Knotentasks (4, 5) auch durch Zuordnung von Elementen (16) des Transmissions-Busstrukturfeldes (14) zu Elementen des Knotentaskfeldes (10) und/oder zu Elementen (15) des Knoten-Busstrukturfeldes (13) vornehmbar ist, wobei die Zuordnung insbesondere durch Drag&Drop-Technik vornehmbar ist.

9. Konfigurationseinrichtung nach einem der Ansprüche 1 bis 8, **dadurch gekennzeichnet, daß** bei Auswahl einer Instanz einer Transmissionstask (6) im Transmissionstaskfeld (11) alle Instanzen der ausgewählten Transmissionstask (6) hervorgehoben dargestellt werden, insbesondere auch die zugehörigen Elemente im Transmissions-Busstrukturfeld (14).

10. Verfahren zur Erzeugung wenigstens eines Knotentask-Programms und wenigstens ein Transmissionstask-Programms für ein zeitgesteuertes Bussystem, wobei das Bussystem wenigstens zwei Busknoten (2a, 2b) und einen die Busknoten (2a, 2b) verbindenden Datenbus (3) aufweist, wobei mit dem Knotentask-Programm auf einem Busknoten (2a, 2b) eine Knotentask (4, 5) implementierbar ist, und wobei mit dem Transmissionstask-Programm auf einem der Busknoten (2a, 2b) wenigstens eine Transmissionstask (6) implementierbar ist, wobei durch eine Konfiguration des Bussystems zunächst die Knotentasks (4, 5) und die Transmissionstasks (6) zeitlich zueinander eingeplant werden, dargestellt werden und einander zugeordnet werden,
**dadurch gekennzeichnet,**
**daß** die Knotentasks (4, 5) in zeitlicher Abfolge in einem Knotentaskfeld (10) dargestellt werden, die Transmissionstasks (6) in zeitlicher Abfolge in einem von dem Knotentaskfeld (10) separaten Transmissionstaskfeld (11) dargestellt werden und die Knotentasks (4, 5) und die Transmissionstasks (6) durch graphische Zuordnungsmittel (12) einander zugeordnet werden.

11. Verfahren nach Anspruch 10, **dadurch gekennzeichnet, daß** einer der Verfahrensschritte durchgeführt wird, die mit der Konfigurationseinrichtung gemäß einem der Ansprüche 2 bis 7 zur Konfiguration eines zeitgesteuerten Bussystems durchführbar sind.

12. Computerprogramm mit Programmcode-Mitteln, um alle mit Hilfe des Verfahrens nach den Ansprüchen 10 und 11 vollzogenen Schritte durchzuführen, wenn das Programm auf einer Datenverarbeitungsanlage ausgeführt wird.

13. Computerprogramm mit Programmcode-Mitteln nach Anspruch 12, die auf einem computerlesbaren Datenträger gespeichert sind.

## Claims

1. A configuration facility comprising at least one computer unit and a display (1) for configuring a time-controlled bus system, the bus system having at least two bus nodes (2a, 2b) and a data bus (3) coupling the bus nodes (2a, 2b), at least one node task (4a, 4b, 5a, 5b) and at least one transmission task (6a 6b) being able to be executed at the bus nodes (2a, 2b), and the node tasks (4a, 4b, 5a, 5b) and the transmission tasks (6a, 6b) being able to be presented in time sequence, scheduled in time and associated with each other in the context of the configuration by means of the configuration facility , and at least one node task program and at least one transmission task program being able to be created on the basis of the configuration performed, by means of which the node task (4a, 4b, 5a, 5b) and the transmission task (6a, 6b) can be implemented at the bus nodes (2a, 2b),
**characterized in that**,
the node tasks (4a, 4b, 5a, 5b) are presented in time sequence in a node task field (10), the transmission tasks (6a, 6b) are presented in time sequence in a transmission task field (11) separate from the node task field (10), and the node tasks (4a, 4b, 5a, 5b) and the transmission tasks (6a, 6b) can be associated with each other by graphic association means.

2. The configuration facility according to claim 1, **characterized in that** the presentation of the node tasks (4, 5) in the node task field (10) and the presentation of the transmission tasks (6) in the transmission task field (11) is time-dependent or time-independent, in particular wherein the presentation can be switched between time dependency and time independency.

3. The configuration facility according to claim 1 or 2, **characterized in that** the presentation of the node tasks (4, 5) in the node task field (10) and/or the presentation of the transmission tasks (6) in the transmission task field (11) is scalable in time.

4. The configuration facility according to one of the claims 1 to 3, **characterized in that** the presentation of the node tasks (4, 5) in the node task field (10) and/or the presentation of transmission tasks (6) in the transmission task field (11) is a segment of the overall time configuration, in particular wherein the segment is selectable.

5. The configuration facility according to one of the claims 1 to 4, **characterized in that** the presentation of the node tasks (4, 5) in the node task field (10) and/or the presentation of transmission tasks (6) in the transmission task field (11) is done as a bar chart, in particular wherein the graphic association means (12) comprises a directional line of connection, in particular wherein the graphic association can be performed by drag & drop techniques.

6. The configuration facility according to one of the claims 1 to 5, **characterized in that** the node tasks (4, 5) to be presented in the node task field (10) and/or the transmission tasks (6) to be presented in the transmission task field (11) can be selected from the totality of the node tasks (4, 5) and/or the totality of the transmission tasks (6), in particular can be selected according to bus node affiliation or according to affiliation with a communication cycle.

7. The configuration facility according to one of the claims 1 to 6, **characterized in that** a node bus structure field (13) associated with the node task field (10) is represented in addition to the node task field (10) and/or a transmission bus structure field (14) associated with the transmission task field (11) is represented in addition to the transmission task field (11), wherein the bus structure fields (13, 14), represent the elements of the bus system, in particular the bus nodes, node tasks, transmission tasks, signals, frames and scheduled times, as a tree diagram, in particular wherein the bus system is arranged in the bus structure fields (13, 14) preferentially hardware-oriented according to bus elements or schedule-oriented according to schedule times, in particular wherein the type of representation can be switched, in particular wherein the selected ordering is automatically transferred to the associated task fields (10, 11) so that the representation of the elements of the bus system is consistent in the bus structure fields (13, 14) and the corresponding task fields (10, 11).

8. The configuration facility according to claim 7, **characterized in that** an association of node tasks (4, 5) with transmission tasks (6) can be performed also by the association of elements (15) of the node bus structure field (13) with elements of the transmission task field (11) and/or with elements (16) of the transmission bus structure field (14), and/or that an association of transmission tasks (6) with node tasks (4, 5) can be performed also by the association of elements (16) of the transmission bus structure field (14) with the elements of the node task field (10) and/or with elements (15) of the node bus structure field (13), wherein the association can be performed particularly using drag & drop techniques.

9. The configuration facility according to one of the claims 1 to 8, **characterized in that** when one instance of a transmission task (6) in the transmission task field (11) is selected, all instances of the selected transmission task (6) are shown highlighted, in particular also the affiliated elements in the transmission bus structure field (14).

10. A method for creating at least one node task program and at least one transmission task program for a time-controlled bus system, the bus system having at least two bus nodes (2a, 2b) and a data bus (3) coupling the bus nodes (2a, 2b), a node task (4, 5) being able to be implemented by means of the node task program at a bus node (2a, 2b), and at least one transmission task (6) being able to be implemented by means of the transmission task program on one of the bus nodes (2a, 2b), the node tasks (4, 5) and the transmission tasks (6) initially being able to be presented in time sequence, scheduled in time and associated with each other by the configuration of the bus system, **characterized in that** the node tasks (4, 5) are presented in time sequence in a node task field (10), the transmission tasks (6) are presented in time sequence in a transmission task field (11) separate from the node task field (10), and the node tasks (4, 5) and the transmission tasks (6) are associated with each other by graphical association means (12).

11. The method according to claim 10, **characterized in that** one of the method steps is performed which can be performed using the configuration facility according to one of the claims 2 to 7 for configuration of a time-controlled bus system.

12. A computer program with program code means to perform all of the implemented steps by means of the method according to claims 10 and 11, when the program is executed on a data processing system.

13. The computer program with program code means according to claim 12, which is stored on a computer-readable data medium.

## Revendications

1. Dispositif de configuration avec au moins une unité de calcul et un dispositif d'affichage (1) pour la configuration d'un système de bus asservi au temps, sachant que le système de bus comporte au moins deux noeuds de bus (2a, 2b) et un bus de données (3) reliant les noeuds de bus (2a, 2b), sachant qu'au moins une tâche de noeud (4a, 4b, 5a, 5b) et au moins une tâche de transmission (6a, 6b) peuvent être exécutées aux noeuds de bus (2a, 2b) et sachant qu'avec le dispositif de configuration, les tâches de noeud (4a, 4b, 5a, 5b) et les tâches de transmission (6a, 6b) peuvent être représentées classées dans le temps, projetées dans le temps et attribuées les unes aux autres dans le cadre de la configuration et que, sur la base de la configuration effectuée, il est possible de générer au moins un programme de tâches de noeud et au moins un programme de tâches de transmission, au moyen desquels la tâche de noeud (4a, 4b, 5a, 5b) et la tâche de transmission (6a, 6b) peuvent être mises en oeuvre sur les noeuds de bus (2a, 2b),
**caractérisé en ce que**
les tâches de noeud (4a, 4b, 5a, 5b) sont représentées en une séquence temporelle dans un champ de tâches de noeud (10), les tâches de transmission (6a, 6b) sont représentées en une séquence temporelle dans un champ de tâches de transmission (11) séparé du champ de tâches de noeud (10) et que les tâches de noeud (4a, 4b, 5a, 5b) et les tâches de transmission (6a, 6b) peuvent être attribués les unes aux autres par des moyens d'attribution graphiques (12).

2. Dispositif de configuration selon la revendication 1, **caractérisé en ce que** la représentation des tâches de noeud (4, 5) dans le champ de tâches de noeud (10) et la représentation des tâches de transmission (6) dans le champ de tâches de transmission (11) est dépendante ou indépendante du temps, sachant particulièrement que la représentation est réversible pour être dépendante du temps ou indépendante du temps.

3. Dispositif de configuration selon la revendication 1 ou 2, **caractérisé en ce que** la représentation des tâches de noeud (4, 5) dans le champ de tâches de noeud (10) et/ou la représentation des tâches de transmission (6) dans le champ de tâches de transmission (11) est/sont étalonnable (s) dans le temps.

4. Dispositif de configuration selon l'une quelconque des revendications 1 à 3, **caractérisé en ce que** la représentation des tâches de noeud (4, 5) dans le champ de tâches de noeud (10) et/ou la représentation des tâches de transmission (6) dans le champ de tâches de transmission (11) est/sont un extrait de la configuration totale dans le temps, sachant particulièrement que l'extrait est sélectionnable.

5. Dispositif de configuration selon l'une quelconque des revendications 1 à 4, **caractérisé en ce que** la représentation des tâches de noeud (4, 5) dans le champs de tâches de noeud (10) et/ou la représentation des tâches de transmission (6) dans le champ de tâches de transmission (11) s'effectue(nt) sous forme de diagramme de Gantt, sachant particulièrement que le moyen d'attribution graphique (12) consiste en une ligne de liaison dirigée, sachant particulièrement que l'attribution graphique peut être effectuée par la méthode glisser-déposer.

6. Dispositif de configuration selon l'une quelconque des revendications 1 à 5, **caractérisé en ce que** les tâches de noeud (4, 5) devant être représentées dans le champ de tâches de noeud (10) et/ou les tâches de transmission (6) devant être représentées dans le champ de tâches de transmission (11) sont sélectionnables à partir de l'ensemble des tâches de noeud (4, 5) et/ou de l'ensemble des tâches de transmission (6), qu'elles sont particulièrement sélectionnables selon l'appartenance au noeud de bus ou selon l'appartenance à un cycle de communication.

7. Dispositif de configuration selon l'une quelconque des revendications 1 à 6, **caractérisé en ce qu'**un champ de structure de bus de noeud (13) attribué au champ de tâches de noeud (10) est représenté en plus du champ de tâches de noeud (10) et/ou un champ de structure de bus de transmission (14) attribué au champ de tâches de transmission (11) est représenté en plus du champ de tâches de transmission (11), sachant que les champs de structure de bus (13, 14) représentent les éléments du système de bus, particulièrement les noeuds de bus, les tâches de noeud, les tâches de transmission, les signaux, les trames et les temps alloués, sous forme d'arborescence, sachant particulièrement que le système de bus, dans les champs de structure de bus (13, 14), est ordonné par rapport aux matériels selon les éléments de bus ou par rapport au programme temporel selon les temps alloués, sachant particulièrement que le mode de représentation est réversible, sachant particulièrement que l'ordre sélectionné est également transmis automatiquement aux champs de tâches (10, 11) attribués, si bien que la représentation des éléments du système de bus est cohérente dans les champs de structure de bus (13, 14) et dans les champs de tâches correspondants 810, 11).

8. Dispositif de configuration selon la revendication 7, **caractérisé en ce qu'**une attribution de tâches de noeud (4, 5) à des tâches de transmission (6) peut également être effectuée par attribution d'éléments (15) du champ de structure de bus de noeud (13) à des éléments du champ de tâches de transmission (11) et/ou à des éléments (16) du champ de structure de bus de transmission (14) et/ou une attribution de tâches de transmission (6) à des tâches de noeud (4, 5) est également possible par attribution d'éléments (16) du champ de structure de bus de transmission (14) à des éléments du champ de tâches de noeud (10) et/ou à des éléments (15) du champ de structure de bus de noeud, sachant que l'attribution peut particulièrement être effectuée par la méthode glisser-déposer.

9. Dispositif de configuration selon l'une quelconque des revendications 1 à 8, **caractérisé en ce qu'**en cas de sélection d'une instance d'une tâche de transmission (6) dans le champ de tâches de transmission (11), toutes les instances de la tâche de transmission (6) sélectionnée sont représentée en surbrillance, particulièrement les éléments afférents dans le champ de structure de bus de transmission (14).

10. Procédé pour générer au moins un programme de tâches de noeud et au moins un programme de tâches de transmission pour un système de bus asservi au temps, sachant que le système de bus comporte au moins deux noeuds de bus (2a, 2b) et un bus de données (3) reliant les noeuds de bus (2a, 2b), sachant qu'avec le programme de tâches de noeud, une tâche de noeud (4, 5) peut être mise en oeuvre sur un noeud de bus (2a, 2b), et sachant qu'avec le programme de tâches de transmission, au moins une tâche de transmission (6) peut être mise en oeuvre sur l'un des noeuds de bus (2a, 2b), sachant que par une configuration du système de bus, les tâches de noeud (4, 5) et les tâches de transmission (6) sont d'abord ordonnancées dans le temps les unes par rapport aux autres, représentées et attribuées les unes aux autres, **caractérisé en ce que** les tâches de noeud (4, 5) sont représentées en une séquence temporelle dans un champ de tâches de noeud (10), les tâches de transmission (6) sont représentées en une séquence temporelle dans un champ de tâches de transmission (11) séparé du champ de tâches de noeud (10) et les tâches de noeud (4, 5) et les tâches de transmission (6) sont attribuées les unes aux autres par des moyens d'attribution graphiques (12).

11. Procédé selon la revendication 10, **caractérisé en ce qu'**il est effectué l'une des étapes de procédé qui sont exécutables avec le dispositif de configuration selon l'une quelconque des revendications 2 à 7 pour la configuration d'un système de bus asservi au temps.

12. Programme d'ordinateur avec des moyens de code de programme pour exécuter toutes les étapes exécutées à l'aide du procédé selon les revendications 10 et 11 lorsque le programme est exécuté sur une installation de traitement de données.

13. Programme d'ordinateur avec des moyens de code de programme selon la revendication 12, qui sont mémorisés sur un support de données lisible par ordinateur.
